# EUROPÄISCHE PATENTSCHRIFT

(11) **EP 2 429 362 B1**
(45) Veröffentlichungstag und Bekanntmachung des Hinweises auf die Patenterteilung: **05.03.2014**
(21) Anmeldenummer: 10718933.4
(22) Anmeldetag: 26.04.2010
(51) Int. Cl.: A47J 43/07

(54) **KÜCHENGERÄT MIT SICHERHEITSVORRICHTUNG**
KITCHEN APPLIANCE HAVING A SAFETY DEVICE
ROBOT MÉNAGER DOTÉ D'UN DISPOSITIF DE SÉCURITÉ

(30) Priorität: 14.05.2009 DE 102009003118
(43) Veröffentlichungstag der Anmeldung: 21.03.2012
(73) Patentinhaber: BSH Bosch und Siemens Hausgeräte GmbH, 81739 München (DE)
(72) Erfinder: BRECKO, Ales, 1241 Kamnik (SI); KOVACIC, Peter, 3303 Gomilsko (SI); PESEC, Jurij, 3301 Petrovce (SI); RUDEZ, Darko, 3230 Sentjur (SI)
(86) Internationale Anmeldenummer: PCT/EP2010/055554
(87) Internationale Veröffentlichungsnummer: WO 2010/130564

(56) Entgegenhaltungen:
- DE-A1- 19 912 750
- FR-A1- 2 856 907

## Beschreibung

### Hintergrund der Erfindung

Die vorliegende Erfindung betrifft ein Küchengerät mit einer Sicherheitsvorrichtung, die eine erste Betätigungseinrichtung, eine zweite Betätigungseinrichtung und eine Steuereinrichtung zum Steuern eines Einschaltens des Küchengeräts umfasst.

### Stand der Technik

Küchengeräte werden üblicherweise mit Elektromotoren betrieben, welche unterschiedliche Werkzeuge zum Verarbeiten von Nahrungsmittel mit einer hohen Drehzahl antreiben. Die Werkzeuge weisen scharfe Kanten und Schneideflächen, die eine Verletzung eines Benutzers verursachen können.

Üblicherweise werden solche Küchengeräte gegen ungewollten Anlauf des Elektromotors mit unterschiedlichen Sicherheitseinrichtungen versehen, welche die Stromzufuhr unterbrechen können, falls das Küchengerät beispielsweise nicht ordnungsgemäß in Betrieb genommen wird oder falls Bedienfehler vorliegen. Die Sicherheitsvorrichtungen können unterschiedlich ausgestaltet sein, beispielsweise können eine Reihe von mechanischen und/oder magnetischen Schaltern implementiert werden, die es erlauben, das ordnungsgemäße Zusammenstellen des Gerätes zu erkennen, um somit die Stromzufuhr bereitzustellen.

Das Zubehör der Küchengeräte kann beispielsweise einer Rührschüssel entsprechen, auf deren Boden sich rotierende Messer oder Mischwerkzeuge befinden. Die Rührschüssel weist einen Deckel auf, der für den ordnungsgemäßen Gebrauch auf der Rührschüssel aufzusetzen ist. Um zu vermeiden, dass der antreibende Elektromotor ohne aufgesetztem Deckel anläuft, weist die Rührschüssel üblicherweise ein Mittel auf, welches erkennen kann, dass der Deckel aufgesetzt worden ist, um somit das Einschalten des Elektromotors gefahrlos zu ermöglichen. Üblicherweise werden mechanische Stößel in einem Griff der Schüssel implementiert, welche dann durch den aufgesetzten Deckel betätigt werden, um wiederum einen Sicherheitsschalter zu schalten, der das Anlaufen des Elektromotors freigibt. Folglich kann ein Benutzer nicht in das rotierende Werkzeug der Rührschüssel eingreifen. Solche Sicherheitseinrichtungen für Küchengeräte sind in der DE 199 12 750 A1 und der FE 2 856 907 A1 offenbart.

Die eingangsgenannte Lösung weist aber unterschiedliche Nachteile auf. Die mechanischen Stößel müssen sehr genau ausgerichtet werden, um ein zuverlässiges Einschalten zu ermöglichen und auch der Implementierungsaufwand dieser Lösung ist erheblich, da die Sicherheitsvorrichtung mit unterschiedlichen Aufsätzen bzw. Zubehörteilen des Küchengeräts zusammenwirken muss. So ist beispielsweise die Eingriffsfläche des Stößels an der Sicherheitsvorrichtung sehr schmal, welches dazuführt, dass die Stößel scharfkantig, spitz oder messerartig ausgebildet werden müssen, welches zusätzlich zu einer möglichen Verletzung des Benutzers des Küchengeräts führen kann.

### Der Erfindung zugrundeliegende Aufgabe

Der Erfindung liegt die Aufgabe zugrunde, ein Küchengerät bereitzustellen, welches einen sicheren Betrieb ermöglicht und insbesondere Verletzungen durch rotierende Werkzeuge vermeidet.

### Erfindungsgemäße Lösung

Die Lösung der gestellten Aufgabe gelingt durch ein Küchengerät mit den Merkmalen des Anspruchs 1. Vorteilhafte Aus- und Weiterbildungert, welche einzeln oder in Kombination miteinander eingesetzt werden können, sind Gegenstand der abhängigen Ansprüche.

Gemäß der vorliegenden Erfindung wird ein Küchengerät mit einer Sicherheitsvorrichtung bereitgestellt. Die Sicherheitsvorrichtung weist eine erste Betätigungseinrichtung, eine zweite Betätigungseinrichtung und eine Steuereinrichtung zum Steuern eines Einschaltens des Küchengeräts auf. Die Steuereinrichtung ist derart eingerichtet, dass das Einschalten des Küchengeräts bei einem Betätigen der ersten und zweiten Betätigungseinrichtung steuerbar ist.

Mindestens eine der erfindungsgemäßen Betätigungseinrichtungen ist schwenkbar gelagert und sind derart eingerichtet um von einem Küchengerätzubehör betätigt zu werden.

Durch die erfindungsgemäße Lösung wird sicher gestellt, dass ein antreibender Elektromotor des Küchengeräts nicht unkontrolliert anlaufen kann. Somit muss das Zubehör des Küchengeräts ordnungsgemäß aufgesetzt werden, damit die Betätigungseinrichtungen der Sicherheitsvorrichtung betätigt werden, um das Einschalten zu steuern. Durch die Verwendung von mindestens zwei Betätigungseinrichtungen in der Sicherheitsvorrichtung kann die Sicherheit erhöht werden, da Bedienfehler nicht mehr entstehen können.

Durch die schwenkbare Lagerung von mindestens einer Betätigungseinrichtung kann der Betätigungshub gesteuert werden, so dass die Kompatibilität des Küchengeräts für unterschiedliches Zubehör gewährleistet werden kann. Die Schwenkbarkeit der Betätigungseinrichtung erlaubt es einen definierten Zeitpunkt des Einschaltens auszubilden bzw. zu implementieren, da keine großen Kräfte für das Schwenken der Einrichtungen notwendig sind.

Die erfindungsgemäße Lösung erlaubt eine vorteilhafte Kombination unterschiedlicher Sicherheitsvorrichtungen, welche durch das Schwenken der Betätigungsvorrichtungen in einer definierten Art und weise zum Einsatz kommen können. So ist es beispielsweise vorstellbar, dass, falls beide Betätigungseinrichtungen Schwenkbar gelagert sind, nur dann das Einschalten des Küchengerätes möglich ist, wenn beide Einrichtungen in einer ausgeschwenkten Einschaltstellung gebracht worden sind. Somit kann das Gerät nur dann in Betrieb genommen werden, wenn beide Betätigungseinrichtungen jeweils deren Schwenkhub bzw. Betätigungshub durchschritten haben.

Gemäß der vorliegenden Erfindung sind die Betätigungseinrichtungen bogenförmig ausgebildet, und weisen jeweils einen Betätigungsbereich auf, welcher jeweils auf einer Außenseite der Betätigungseinrichtungen angeordnet ist. Durch die bogenförmige Ausbildung der Betätigungseinrichtungen kann der Betätigungshub genau eingestellt werden. Ferner kann können die Betätigungseinrichtungen durch die Bogenform rotierende Teile des Küchengeräts umschließen und das Gerät kann somit besonders platzsparend hergestellt werden.

### Bevorzugte Ausgestaltung der Erfindung

Zweckmäßigerweise weisen die Betätigungseinrichtungen jeweils einen ersten und einen zweiten Schwenkpunkt auf. Dadurch können die Betätigungseinrichtungen an unterschiedlichen Punkten innerhalb des Gehäuses montiert werden, welches wiederum einer platzsparenden und flexiblen Ausführung des Küchengeräts entspricht.

Bevorzugt weist die Steuereinrichtung Mittel zum Kontaktieren der ersten und/oder der zweiten Betätigungseinrichtung auf. Folglich kann die Schwenkbewegung der jeweiligen Betätigungseinrichtung in der Steuereinrichtung umgesetzt werden, welches den Betrieb des Küchengeräts anschließend erlaubt oder nicht.

Gemäß eine bevorzugten Ausführungsform der vorliegenden Erfindung weisen die Betätigungseinrichtungen elastische Mittel auf, um in eine unbetätigte Position gebracht zu werden. Das heißt, dass die Betätigungseinrichtung nach Entfernen einer Schüssel des Küchengeräts wieder in deren jeweiligen Ausgangsposition geführt werden. Dies kann beispielsweise mit Hilfe metallischer Feder, die vormontiert auf den Betätigungseinrichtungen sind und die notwendige Federkraft bereitstellen. Die Spannfedern können klammerartig realisiert werden und die stützen sich einerseits auf der jeweiligen Betätigungseinrichtung und auf der anderen Seite beliebig an einem Gehäuse oder an einem Gehäuseteil des Küchengeräts. Durch den klammerartigen oder V-förmigen Aufbau werden die Federn zusammengepresst wenn die Betätigungseinrichtungen betätigt werden, welches wiederum die Federkraft zum Wiederkehren in die jeweilige Ausgangsposition der Betätigungseinrichtungen bereitstellt.

Bevorzugt ist die Steuereinrichtung an einem Gehäuse des Küchengeräts zwischen den Betätigungseinrichtungen angeordnet. So können die Schalter der Steuereinrichtung genau von den Betätigungseinrichtungen erreicht werden. Die Schalter geben dann wiederum den Betrieb des Küchengeräts frei.

Bevorzugt ist die Steuereinrichtung auf der zweiten Betätigungseinrichtung angeordnet. Somit kann der Platz innerhalb des Gehäuses des Küchengeräts noch effektiver ausgefüllt werden.

Zweckmäßigerweise sind die Betätigungseinrichtungen im Wesentlichen gegenüberliegend am Küchengerät angeordnet. Durch diesen symmetrischen Aufbau der Betätigungseinrichtungen, die gegenüberliegend voneinander die rotierenden Wellen umschließen, kann die Genauigkeit erhöht werden. Die erste Betätigungseinrichtung empfängt beispielsweise den Stößel, der vom Deckel der Schüssel betätigt wird und die zweite Betätigungseinrichtung den Stößel im Bereich des Bajonettverschlusses im unteren Bereich der Schüssel. So kann Fehlfunktionen durch Verschmutzungen entgegengewirkt werden.

Bevorzugt ist der Betätigungsbereich der ersten Betätigungseinrichtung derart eingerichtet ist, um von einem Betätigungsmittel betätigt zu werden, welches an einem Gehäuse des Küchengerätes oder an einem Küchengerätzubehör angeordnet ist. Dies erhöht die Einsatzflexibilität der Betätigungseinrichtung.

Ebenfalls bevorzugt ist der Betätigungsbereich der zweiten Betätigungseinrichtung (12) derart eingerichtet, um von einem Betätigungsmittel betätigt zu werden, welches an einem Küchengerätzubehör oder an dem Gehäuse des Küchengerätes angeordnet ist.

Zweckmäßigerweise können die Betätigungseinrichtungen einen gemeinsamen Schwenkpunkt aufweisen, derart dass die Betätigungseinrichtungen um einen Aufnahmebereich von Küchengerätezubehör angeordnet sind. Durch die Verwendung eines gemeinsamen Schwenkpunktes für beide Betätigungseinrichtungen kann eine schnelle Montage erreicht werden, da nur noch ein Montageschritt notwendig ist.

Besonders bevorzugt sind Betätigungseinrichtungen im Wesentlichen in einer Ebene angeordnet. Durch diese bevorzugte Anordnung Betätigungseinrichtungen kann der Platz innerhalb des Gehäuses effektiv ausgenutzt werden.

Es ist bevorzugt, dass die erste Betätigungseinrichtung mit einem Mittel, welches an einem unteren Bereich eines Küchengerätzubehörs angeordnet ist, zusammenwirkt, derart dass die erste Betätigungseinrichtung um den Schwenkpunkt schwenkbar ist. Durch diese Anordnung kann die erste Betätigungseinrichtung mit einem Mittel welches im Bajonettverschluss des Zubehörteils angeordnet ist, zusammenwirken und der sichere Betrieb des Küchengeräts ist gewährleistet.

Zweckmäßigerweise ist es bevorzugt, dass die zweite Betätigungseinrichtung mit einem Mittel, welches durch ein Aufsetzen eines Abdeckteils des Küchengerätzubehörs bereitstellbar ist, zusammenwirkt. Somit kann das Aufsetzen eines Deckels des Zubehörteils detektiert werden, und folglich kann ggf. der Betrieb des Küchengeräts freigegeben werden.

Es ist vorstellbar, dass das Küchengerät einen Sicherheitsschalter aufweist, welcher mit der ersten und zweiten Betätigungseinrichtung zusammenwirkt, um den Betrieb des Küchengerätes zu steuern. Durch den Einsatz eines solchen Schalters kann der Betrieb noch sicherer gemacht werden.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 ein Küchengerät gemäß der vorliegenden Erfindung ohne Gehäuseabdeckung;
Fig. 2 eine Draufsicht auf das Küchengerät mit der Sicherheitsvorrichtung;
Fig. 3 eine perspektivische Ansicht auf das Küchengerät ohne Gehäuseabdeckung; und schließlich
Fig. 4 eine schematische Ansicht des Küchengeräts gemäß der vorliegenden Erfindung mit aufgesetzter Gehäuseabdeckung.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

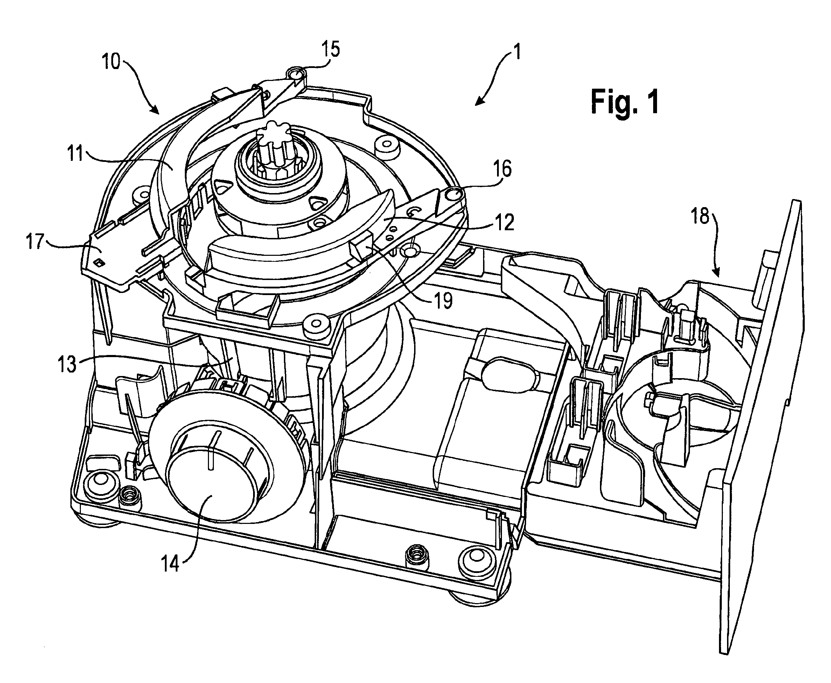

Fig. 1 zeigt ein Küchengerät 1 gemäß der vorliegenden Erfindung. Das Küchengerät 1 weist eine Sicherheitsvorrichtung 10 auf, welche eine erste Betätigungseinrichtung 11 und eine zweite Betätigungseinrichtung 12 aufweist. Beide Betätigungseinrichtungen 11 und 12 sind schwenkbar an einem Gehäuse 40 oder an einem Korpus des Küchengerätes gelagert. Die erste Betätigungseinrichtung 11 weist einen ersten Schwenkpunkt 15 und die zweite Betätigungseinrichtung 12 einen zweiten Schwenkpunkt 16 auf. Somit können beide Betätigungseinrichtungen 11, 12 jeweils um deren Schwenkpunke 15 oder 16 schwenken.

Gemäß einer bevorzugten Ausführungsform sind beide Betätigungseinrichtungen 11, 12 bogenförmig ausgebildet und erstrecken sich bevorzugt in einer Ebene. Gemäß einem Ausführungsbeispiel verläuft die Innenseite der bogenförmigen Betätigungseinrichtungen 11,12 um die Antriebskupplung des Elektromotors 13 des Küchengerätes 1.

Gemäß diesem Ausführungsbeispiel umfasst die erste Betätigungseinrichtung 11 eine Aufnahmefläche 17 für die Steuereinrichtung 20. Diese Aufnahmefläche 17 ist derart ausgebildet, dass eine Platine bzw. Leiterplatte der Steuereinrichtung 20 aufgenommen werden kann. In diesem Fall schwenkt die Steuereinrichtung 20 zusammen mit der ersten Betätigungseinrichtung 11 um den gemeinsamen Schwenkpunkt 15.

Beide Betätigungseinrichtungen 11 und 12 der Sicherheitsvorrichtung 10 des Küchengeräts 1 sind derart eingerichtet, dass sie von einem Zubehör des Küchengeräts betätigt werden können. Eine Rührschüssel kann beispielsweise mittels eines Bajonettverschlusses 41 an das Küchengerät angebracht werden. Durch das Anbringen der Rührschüssel wird erfindungsgemäß jeweils eine der Betätigungseinrichtungen 11 oder 12 betätigt, so dass das Einschalten des Elektromotors 13 des Küchengerätes 1 gesteuert werden kann. Somit kann gesichert werden, dass der Elektromotor 13 nur dann anläuft, wenn die Rührschüssel ordnungsgemäß in der Aufnahme bzw. auf dem Bajonettverschluss 41 aufgesetzt worden ist.

Um das Küchengerät ordnungsgemäß in Betrieb nehmen zu können, müssen beide Betätigungseinrichtungen 11 und 12 betätigt werden. So wird beispielsweise bei der Verwendung einer Rührschüssel zuerst die erste Betätigungseinrichtung 11 aktiviert. Dieses Mittel befindet sich beispielsweise im unteren Bereich der Rührschüssel, nämlich im Bereich der Schnittstelle zwischen Rührschüssel und Bajonettverschluss 41 am Gehäuse 40 des Küchengerätes 1. Das Mittel kann beispielsweise als Stift ausgebildet werden, welches durch Eindrehen in den Bajonettverschluss 41 die erste Betätigungseinrichtung 11 betätigt. Die zweite Betätigungseinrichtung 12 kann von einem zweiten Mittel betätigt werden. Auch dieses Mittel ist mechanischer Art und wird beispielsweise durch ein Aufsetzen eines Deckels der Rührschüssel bereitgestellt. Das Aufsetzen des Deckels auf die Rührschüssel bewirkt, dass ein Stößel im Bereich des Bodens bzw. der Schnittstelle der Rührschüssel herausragt, um die zweite Betätigungseinrichtung 12 betätigen zu können. Die zweite Betätigungseinrichtung 12 weist ein Betätigungsprisma 19 auf, welches von dem Stößel aktiviert werden kann. Dieses Betätigungsprisma 19 weist unterschiedliche Betätigungsflächen auf, so dass die Rührschüssel entweder mit aufgesetztem Deckel in dem Bajonettverschluss 41 eingedreht werden kann oder ohne Deckel. Das heißt, die erste Fase bzw. die Betätigungsfläche des Prismas 19 kommt zur Geltung falls der Deckel nachträglich eingesetzt wird, und die zweite Fase falls zuerst der Deckel eingesetzt wird und dann eine Eindrehung in den Bajonettverschluss 41 erfolgt ist. Somit kann gesichert werden, dass beide Betätigungseinrichtungen 11 und 12 bei jeglicher Kombination von Bedienmöglichkeiten richtig arbeiten.

Nachdem das Küchengerät 1 ordnungsgemäß zusammengebaut worden ist kann der Benutzer am Bedienknopf 14 die gewünschten Handlungen vornehmen. So kann er beispielsweise das Gerät 1 einschalten oder das Gerät 1 mit unterschiedlichen Drehzahlen bedienen. Der Elektromotor 13 kann somit sicher das Werkzeug antreiben, welches sich innerhalb der Rührschüssel sicher drehen kann, ohne dass der Benutzer ungewollt in die drehenden Messer eingreifen kann. Falls beispielsweise im Betrieb der Deckel abgenommen wird, bewirkt dies, dass der Stößel im Boden der Rührschüssel zurückgezogen wird, und somit entsteht kein Betätigungsdruck mehr auf der zweiten Betätigungseinrichtung, welches dazuführt, dass der Kontakt zwischen der ersten und zweiten Betätigungseinrichtung unterbrochen wird. Nachdem dieser Kontakt unterbrochen worden stoppt der Elektromotor 13, so dass kein Verletzen möglich ist.

Gemäß der vorliegenden Erfindung muss daher gesichert werden, dass beide Betätigungseinrichtungen 11 und 12 betätigt werden, um ein Einschalten des Elektromotors überhaupt ermöglichen zu können. Das Schwenken der Betätigungseinrichtungen 11 und 12 kann beispielsweise mit Hilfe von elastischen Mitteln unterstützt werden, so dass ein Schwenken in eine Ausgangsposition beispielsweise bei der Abnahme der Rührschüssel jederzeit gesichert werden kann. Gemäß einer Ausführungsform weist die Sicherheitsvorrichtung 10 mindestens einen Schalter auf, welcher sich auf der Aufnahmefläche 17 der ersten Betätigungseinrichtung 11 befinden kann. Dieser Schalter kann daher nur betätigt werden bzw. aktiviert werden falls beide Betätigungseinrichtungen 11 und 12 gemeinsam um jeweils deren Schwenkpunkte 15 und 16 in einer Endstellung bzw. einer Einschaltstellung gebracht worden sind. Diese Einschaltstellung wird beispielsweise in diesem Fall von einer Rührschüssel zusammen mit dem Aufsetzen des Deckels bewirkt. Falls beispielsweise nur die Rührschüssel in dem Bajonettverschluss 41 des Küchengeräts 1 eingedreht worden ist, wird nur der halbe Betätigungshub der Sicherheitsvorrichtung 10 bewirkt, und der Schalter, welcher sich auf der Aufnahmefläche 17 befindet, kann nicht aktiviert bzw. eingeschaltet werden. Das heißt, der Benutzer muss auch den Deckel aufsetzen, um das Einschalten des Küchengeräts 1 bereitstellen zu können.

Bevorzugt weist der Schalter zwei Schaltmitteln auf, welche den jeweiligen Betätigungseinrichtungen zugeordnet sind.

Beide Schwenkpunkte 15 und 16 können beispielsweise mit Hilfe von Schrauben oder elastischen Mitteln in das Gehäuse des Küchengeräts 1 eingebaut werden. Auch vorstellbar ist, dass beide Betätigungseinrichtungen 11 und 12 integral mit dem Gehäuse ausgeformt worden sind, welches eine kostengünstige Produktion des Küchengeräts ermöglichen kann. Ferner zeigt die Fig. 1 eine Schublade 18 in geöffneter Stellung auf, welche zum Aufbewahren von Werkzeug oder Zubehör des Küchengeräts 1 eingerichtet ist. Es ist vorstellbar, dass der Fachmann mehr als zwei Betätigungseinrichtungen 11 und 12 für das Küchengerät vorsieht, um die Bediensicherheit zu erhöhen.

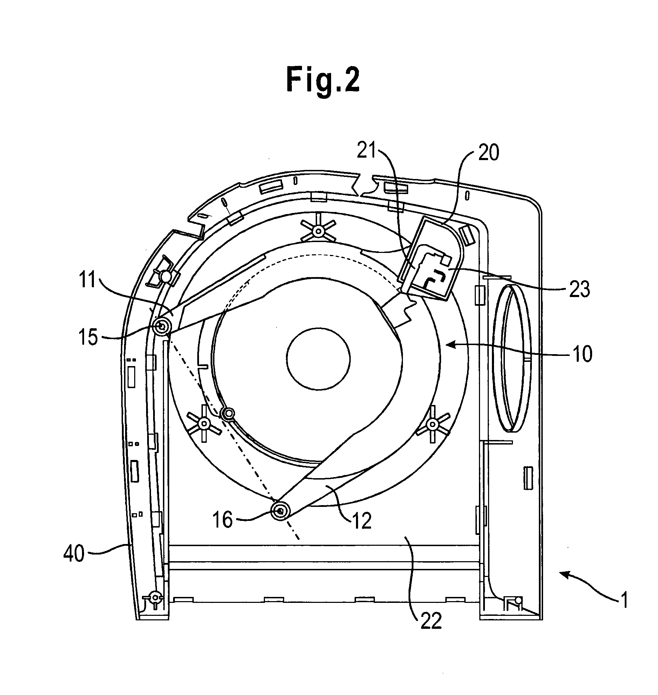

Fig. 2 zeigt eine Draufsicht auf das Küchengerät 1 mit der Sicherheitsvorrichtung 10. Beide Betätigungseinrichtungen 11 und 12 schwenken jeweils um einen Punkt 15, 16 am Gehäuse 40 des Küchengeräts 1. Die Schwenkpunkte 15 und 16 der Betätigungseinrichtungen 11 und 12 wurden gegenüberliegend am Gehäuse 40 angeordnet. Es ist jedoch vorstellbar, dass beide Schwenkpunkte 15 und 16 in einem einzigen Punkt zusammenfassbar sind. Das Zusammenfassen erleichtert die Montage des Küchengeräts in der Produktionsphase und die Stabilität der Sicherheitsvorrichtung 10 kann ebenfalls erhöht werden. In diesem Beispiel werden jedoch beide Punkte 15 und 16 unterschiedlich betrachtet. Die Betätigungseinrichtungen 11 und 12 liegen bevorzugt in einer Ebene, so dass diese am gegenüberliegenden Punkt der jeweiligen Schwenkpunkte 15, 16 leicht zusammen kontaktiert werden können. Wie bereits oben erwähnt wird das Kontaktieren durch ein Aufsetzen einer Rührschüssel samt Deckel bewirkt. Gemäß dieser Ausführungsform ist die Sicherheitsvorrichtung 10 oberhalb eines Elektromotors 13 angeordnet, der wiederum auf einem Geräteboden 22 mit geeigneten Mitteln befestigt worden ist. Gemäß diesem Ausführungsbeispiel umfasst die erste Betätigungseinrichtung 11 eine Aufnahmefläche 17, auf welcher sich eine Steuereinrichtung bzw. eine Platine oder eine Steuerplatine 23 befindet. Diese Steuerplatine weist einen Schalter auf, welcher das Einschalten des Küchengeräts 1 steuern kann. Dieser Schalter wird nur dann aktiviert, falls in diesem Kontaktpunkt beide Betätigungseinrichtungen zusammen kommen. Der Schalter kann bevorzugt zwei Schaltmitteln aufweisen, welche jeweils von der ersten bzw. der zweiten Betätigungseinrichtung betätigt werden können. D.h. beide Schaltmitteln müssen in der Einschaltstellung gebracht werden, damit das Küchengerät ordnungsgemäß im Betrieb genommen werden kann.

Der bogenförmige Aufbau der Betätigungseinrichtungen 11 und 12 ermöglicht ein kontrolliertes Steuern des Kontaktierens zwischen der ersten Betätigungseinrichtung 11 und der zweiten Betätigungseinrichtung 12 im Bereich der Steuerplatine 23 bzw. der Steuereinrichtung 20.

Beide Betätigungsflächen der Betätigungseinrichtungen 11 und 12 befinden sich gemäß diesem Ausführungsbeispiel ungefähr in der Mitte der Bögen 11 und 12. Durch diese Anordnung kann ein sicherer Kontakt der beiden Betätigungseinrichtungen 11 und 12 gesichert werden, und ein sicherer Betrieb bei aufgesetzter Schüssel und aufgesetztem Deckel kann garantiert werden. Die erste Betätigungseinrichtung 11 kann eine Betätigungskulisse im Bereich des Bogens an der Außenseite aufweisen, so dass das Mittel, welches sich am Boden der Rührschüssel im Bereich der Schnittstelle befindet, sicher eingreifen kann, um den späteren Kontakt zu der zweiten Betätigungseinrichtung 12 bereitstellen zu können. Die zweite Betätigungseinrichtung 12 weist, wie in der Fig. 1 bereits erklärt, ein Betätigungsprisma 19 auf, welches den Stößel im Bereich des Bodens der Rührschüssel empfangen kann.

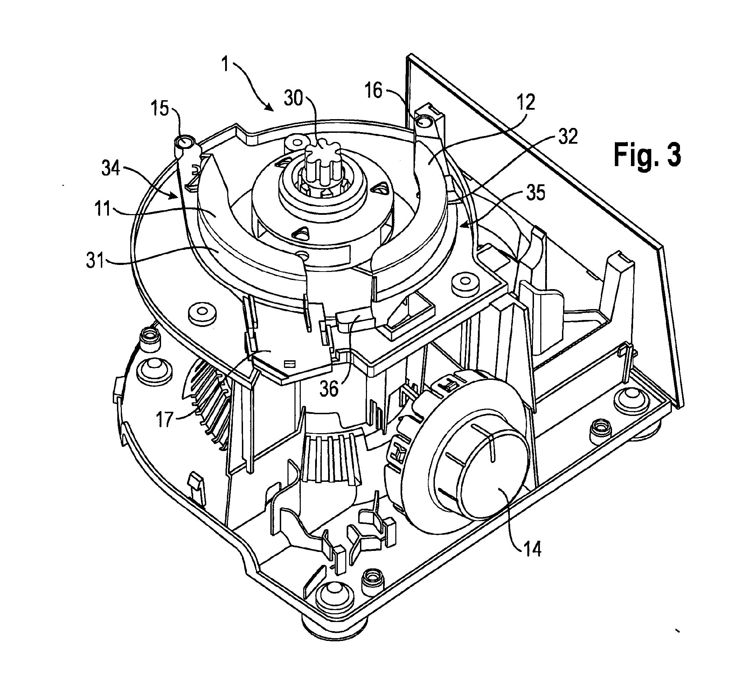

Fig. 3 zeigt eine weitere perspektivische Ansicht des Küchengeräts 1 gemäß der vorliegenden Erfindung. Die bogenförmigen Betätigungseinrichtungen 11 und 12 sind derart eingerichtet um im Bereich der Aufnahmefläche 17 kontaktiert werden zu können. Daher weist die zweite Betätigungseinrichtung 12 einen Kontaktbereich 36 auf, welcher eingerichtet ist, um geeignete Mittel aufnehmen zu können, welche den Schalter, der sich auf der Aufnahmefläche 17 der ersten Betätigungseinrichtung befindet, kontaktieren zu können. Wenn eine Rührschüssel auf dem Bajonettverschluss 41 des Küchengeräts 1 aufgesetzt wird, werden beide Betätigungseinrichtungen 11 und 12 betätigt, die jeweils den halben Betätigungshub durchschreiten, um einen Kontakt im Bereich 36 bzw. 17 bereitstellen zu können. Nachdem diese Kontaktierung erfolgt ist, kann das Gerät 1 betriebsgemäß bzw. ordnungsgemäß aktiviert werden.

Beide Betätigungseinrichtungen 11 bzw. 12 weisen jeweils einen ersten Betätigungsbereich 31 und einen zweiten Betätigungsbereich 32, welcher sich auf einer Außenseite 34, 35 befindet. Gemäß dieser Ausführungsform weisen die Betätigungseinrichtungen einen bogenförmigen Aufbau auf, so dass die Betätigungsbereiche 31, 32 bogenförmig verlaufen. Ein anderer Aufbau, beispielsweise ein Betätigungsbereich 31 oder 32 mit einer Einbuchtung ist ebenfalls vorstellbar. Falls beispielsweise die Betätigungsbereiche 31, 32 als Einbuchtung ausgebildet sind, kann beispielsweise ein späteres Kontaktieren beider Betätigungseinrichtungen 11 und 12 erreicht werden. Somit kann der Zeitpunkt des Kontaktierens bzw. des Inbetriebnehmens des Küchengeräts 1 beeinflusst werden. Beide Betätigungseinrichtungen 11 und 12 verlaufen bogenförmig um die Antriebskupplung des Elektromotors 13. Der Elektromotor 13 wird anschließend mit Hilfe des Bedienknopfes bzw. Bedienteils 14 am Gehäuse 40 des Küchengeräts 1 bedient.

Nachdem die Rührschüssel vom Bajonettverschluss 41 des Küchengeräts 1 entfernt worden ist, sollten die Betätigungseinrichtungen 11 und 12 wieder jeweils in deren Ausgangsstellung schwenken. Die Ausgangsstellung entspricht einem Nichtkontaktieren des Schalters im Bereich 17 der ersten Betätigungseinrichtung 11. Dieses Schwenken in die Ausgangsstellung der Betätigungseinrichtungen 11 und 12, kann beispielsweise mit Hilfe mechanischer Federn erreicht werden, welche sich innerhalb des Schwenkpunktes 15 bzw. 16 befinden. Wie bereits in der Fig. 2 erwähnt, kann ein integraler Aufbau der Betätigungseinrichtung aus einem plastischen Material innerhalb des Gehäuses vorgesehen werden, so dass die zuvor erwähnte Elastizität, die notwendig ist, um die Einrichtungen 11 und 12 in die Ausgangsstellung zurückzubringen, bereits konstruktionsbedingt gegeben ist. Aus Gründen der Übersichtlichkeit werden diese mechanischen Rückholfedern, welche die Betätigungseinrichtungen 11 und 12 in die Ausgangsstellung bringt, nicht dargestellt. Falls beispielsweise ein Benutzer den Deckel von der Rührschüssel abnimmt, bewirkt dies, dass der Stößel im Boden bzw. an der Schnittstelle zwischen Bajonettverschluss 41 und Boden der Rührschüssel nicht mehr auf das Betätigungsprisma 19 eingreifen kann, und somit wird die zweite Betätigungseinrichtung 12 in ihrer Ausgangsstellung mittels der Rückholfeder zurückgeholt. Das bewirkt, dass die Kontaktierung im Bereich 17 bzw. 36 der jeweiligen Betätigungseinrichtung 11 oder 12 nicht mehr zustande kommen kann und die Stromverbindung zum Elektromotor wird somit unterbrochen.

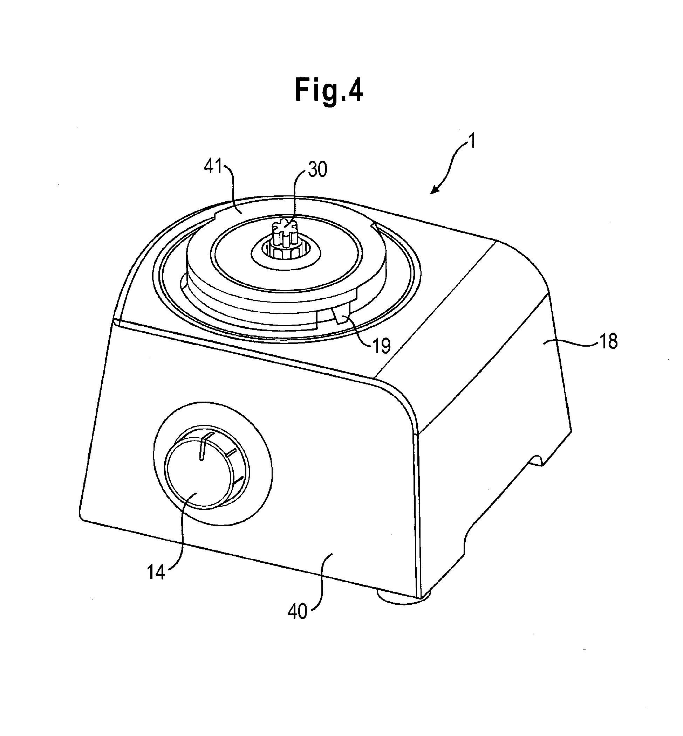

Fig. 4 zeigt eine schematische Ansicht des Küchengeräts 1 gemäß der vorliegenden Erfindung mit aufgesetzter Gehäuseabdeckung. Das Gehäuse 40 umschließt alle elektrischen und mechanischen Komponenten innerhalb des Küchengeräts 1 ein. Die Schublade 18 ist derart ausgebildet, dass diese in das Gehäuse 40 aufgenommen werden kann, so dass keine störenden Kanten beim Aufbewahren des Küchengeräts entstehen. Der Bajonettverschluss 41 ist derart ausgebildet, dass die Antriebskupplung 30 durchragt, um wiederum ein Werkzeug, welches sich beispielsweise in einer Rührschüssel des Küchengeräts 1 befindet, antreiben zu können. Der Bajonettverschluss 41 weist zwei Bereiche auf, nämlich einen Bereich mit einer Betätigungskulisse für die erste Betätigungseinrichtung und einen Bereich mit einem Betätigungsprisma 19, welches für die zweite Betätigungseinrichtung 12 zuständig ist, auf. Das heißt, beim Aufsetzen einer Rührschüssel oder eines Mixbechers auf das Küchengerät müssen beide Bereiche, nämlich die Betätigungskulisse und das Betätigungsprisma 19 betätigt werden, damit das Küchengerät 1 ordnungsgemäß in Betrieb genommen werden kann. Nach Aufsetzen der Rührschüssel und Schließen des Deckels kann das Gerät 1 mittels des Bedienteils 14 ordnungsgemäß und sicher bedient werden.

### Bezugszeichenliste

- 1: Küchengerät

- 10: Sicherheitsvorrichtung
- 11: erste Betätigungseinrichtung
- 12: zweite Betätigungseinrichtung
- 13: Elektromotor
- 14: Bedienteil
- 15: erster Schwenkpunkt
- 16: zweiter Schwenkpunkt
- 17: Aufnahmefläche für Steuereinrichtung bzw. Platine
- 18: Werkzeugschublade
- 19: Betätigungsprisma

- 20: Steuereinrichtung
- 21: Mittel zum Kontaktieren
- 22: Geräteboden
- 23: Steuerplatine

- 30: Antriebskupplung
- 31: erster Betätigungsbereich
- 32: zweiter Betätigungsbereich
- 34: Außenseite der ersten Betätigungseinrichtung
- 35: Außenseite der zweiten Betätigungseinrichtung
- 36: Kontaktbereich

- 40: Gehäuse
- 41: Aufnahmebereich insbesondere Bajonettverschluss

## Patentansprüche

1. Küchengerät (1) mit einer Sicherheitsvorrichtung (10), die eine erste Betätigungseinrichtung (11), eine zweite Betätigungseinrichtung (12) und eine Einrichtung (20) zum Steuern eines Einschaltens des Küchengeräts (1) umfasst, wobei die Steuereinrichtung (20) derart eingerichtet ist, um das Einschalten des Küchengeräts (1) bei einem Betätigen der ersten und der zweiten Betätigungseinrichtung (11, 12) zu steuern, wobei mindestens eine der ersten oder zweiten Betätigungseinrichtung (11, 12) schwenkbar gelagert ist, und derart eingerichtet sind, um von einem Küchengerätzubehör betätigt zu werden, **dadurch gekennzeichnet, dass** die Betätigungseinrichtungen (11, 12) bogenförmig ausgebildet sind, und jeweils einen Betätigungsbereich (31, 32) aufweisen, welcher jeweils auf einer Außenseite (34, 35) der Betätigungseinrichtungen (11, 12) angeordnet ist.

2. Küchengerät (1) nach Anspruch 1 oder 2, **dadurch gekennzeichnet, dass** die Betätigungseinrichtungen (11, 12) jeweils einen ersten und einen zweiten Schwenkpunkt (15, 16) aufweisen.

3. Küchengerät (1) nach einem der vorhergehenden Ansprüche, **dadurch gekennzeichnet, dass** die Steuereinrichtung (20) Mittel zum Kontaktieren (21) der ersten und/oder der zweiten Betätigungseinrichtung (11, 12) aufweist.

4. Küchengerät (1) nach einem der vorhergehenden Ansprüche, **dadurch gekennzeichnet, dass** die Betätigungseinrichtungen (11, 12) elastische Mittel aufweisen, um in eine unbetätigte Position gebracht zu werden.

5. Küchengerät (1) nach einem der vorhergehenden Ansprüche, **dadurch gekennzeichnet, dass** die Steuereinrichtung (20) an einem Gehäuse (40) des Küchengeräts (1) zwischen den Betätigungseinrichtungen (11, 12) angeordnet ist.

6. Küchengerät (1) nach einem der vorhergehenden Ansprüche, **dadurch gekennzeichnet, dass** die Steuereinrichtung (20) auf der zweiten Betätigungseinrichtung (12) angeordnet ist.

7. Küchengerät (1) nach einem der vorhergehenden Ansprüche, **dadurch gekennzeichnet, dass** die Betätigungseinrichtungen (11, 12) im Wesentlichen gegenüberliegend am Küchengerät angeordnet sind.

8. Küchengerät (1) nach einem der vorhergehenden Ansprüche, **dadurch gekennzeichnet, dass** der Betätigungsbereich (31) der ersten Betätigungseinrichtung (11) derart eingerichtet ist, um von einem Betätigungsmittel betätigt zu werden, welches an einem Gehäuse (4) des Küchengerätes oder an einem Küchengerätzubehör angeordnet ist.

9. Küchengerät (1) nach einem der vorhergehenden Ansprüche, **dadurch gekennzeichnet, dass** der Betätigungsbereich (32) der zweiten Betätigungseinrichtung (12) derart eingerichtet ist, um von einem Betätigungsmittel betätigt zu werden, welches an einem Küchengerätzubehör oder an dem Gehäuse (4) des Küchengerätes (1) angeordnet ist.

10. Küchengerät (1) nach einem der vorhergehenden Ansprüche, **dadurch gekennzeichnet, dass** die Betätigungseinrichtungen (11, 12) einen gemeinsamen Schwenkpunkt aufweisen, derart dass die Betätigungseinrichtungen (11, 12) um einen Aufnahmebereich (41) von Küchengerätezubehör angeordnet sind.

11. Küchengerät (1) nach einem der vorhergehenden Ansprüche, **dadurch gekennzeichnet, dass** die Betätigungseinrichtungen (11, 12) im Wesentlichen in einer Ebene angeordnet sind.

12. Küchengerät (1) nach einem der vorhergehenden Ansprüche, **dadurch gekennzeichnet, dass** die erste Betätigungseinrichtung (11) mit einem Mittel, welches an einem unteren Bereich eines Küchengerätzubehörs angeordnet ist, zusammenwirkt, derart dass die erste Betätigungseinrichtung um den Schwenkpunkt (15) schwenkbar ist.

13. Küchengerät (1) nach einem der vorhergehenden Ansprüche, **dadurch gekennzeichnet, dass** die zweite Betätigungseinrichtung (12) mit einem Mittel, welches durch ein Aufsetzen eines Abdeckteils des Küchengerätzubehörs bereitstellbar ist, zusammenwirkt.

14. Küchengerät (1) nach einem der vorhergehenden Ansprüche, **dadurch gekennzeichnet, dass** das Küchengerät einen Sicherheitsschalter aufweist, welcher mit der ersten und zweiten Betätigungseinrichtung (11, 12) zusammenwirkt, um den Betrieb des Küchengerätes (1) zu steuern.

## Claims

1. Kitchen appliance (1) having a safety device (10), comprising a first actuating device (11), a second actuating device (12) and a device (20) for controlling activation of the kitchen appliance (1), wherein the control device (20) is configured so as to control the activation of the kitchen appliance (1) in the event of an actuation of the first and the second actuating device (11, 12), with at least one of the first or the second actuating devices (11, 12) being pivotably supported and being configured so as to be actuated by a kitchen appliance accessory, **characterised in that** the actuation devices (11, 12) are embodied in a curved shape and each have an actuation area (31, 32) which is arranged in each case on an outer side (34, 35) of the actuating devices (11, 12).

2. Kitchen appliance (1) according to claim 1 or 2, **characterised in that** the actuating devices (11, 12) each have a first and a second pivot point (15, 16).

3. Kitchen appliance (1) according to one of the preceding claims, **characterised in that** the control device (20) has means for contacting (21) the first and/or the second actuating device (11, 12).

4. Kitchen appliance (1) according to one of the preceding claims, **characterised in that** the actuating devices (11, 12) have elastic means to enable them to be brought into a non-actuated position.

5. Kitchen appliance (1) according to one of the preceding claims, **characterised in that** the control device (20) is arranged on a housing (40) of the kitchen appliance (1) between the actuating devices (11, 12).

6. Kitchen appliance (1) according to one of the preceding claims, **characterised in that** the control device (20) is arranged on the second actuating device (12).

7. Kitchen appliance (1) according to one of the preceding claims, **characterised in that** the actuating devices (11, 12) are arranged essentially opposite one another on the kitchen appliance.

8. Kitchen appliance (1) according to one of the preceding claims, **characterised in that** the actuation area (31) of the first actuating device (11) is configured so as to be actuated by an actuating means which is arranged on a housing (4) of the kitchen appliance or on a kitchen appliance accessory.

9. Kitchen appliance (1) according to one of the preceding claims, **characterised in that** the actuation area (31) of the second actuating device (12) is configured so as to be actuated by an actuating means which is arranged on a kitchen appliance accessory or on the housing (4) of the kitchen appliance (1).

10. Kitchen appliance (1) according to one of the preceding claims, **characterised in that** the actuating devices (11, 12) have a common pivot point, such that the actuating devices (11, 12) are arranged around an area (41) for receiving kitchen appliance accessories.

11. Kitchen appliance (1) according to one of the preceding claims, **characterised in that** the actuating devices (11, 12) are essentially arranged in one plane.

12. Kitchen appliance (1) according to one of the preceding claims, **characterised in that** the first actuating device (11) interacts with a means which is arranged on a lower area of a kitchen appliance accessory, such that the first actuating device is able to be pivoted around the pivot point (15).

13. Kitchen appliance (1) according to one of the preceding claims, **characterised in that** the second actuating device (12) interacts with a means which is able to be provided by putting a cover onto the kitchen appliance accessory.

14. Kitchen appliance (1) according to one of the preceding claims, **characterised in that** the kitchen appliance has a safety switch which interacts with the first and the second actuating device (11, 12) in order to control the operation of the kitchen appliance (1).

## Revendications

1. Appareil de cuisine (1) dote d'un dispositif de sécurité (10) qui comprend un premier dispositif d'actionnement (11), un deuxième dispositif d'actionnement (12) et un dispositif (20) pour commander une mise sous tension de l'appareil de cuisine (1), le dispositif de commande (20) étant adaptée pour commander la mise sous tension de l'appareil de cuisine (1) lors d'un actionnement des premier et deuxième dispositifs d'actionnement (11, 12), au moins l'un des premier ou deuxième dispositifs d'actionnement (11, 12) étant monté pivotant, et étant adapté pour être actionné par un accessoire de l'appareil de cuisine, **caractérisé en ce que** les dispositifs d'actionnement (11, 12) sont réalisés en forme d'arc, et ont chacun une zone d'actionnement (31, 32) placée à chaque fois sur un côté extérieur (34, 35) des dispositifs d'actionnement (11, 12).

2. Appareil de cuisine (1) selon la revendication 1 ou 2, **caractérisé en ce que** les dispositifs d'actionnement (11, 12) ont respectivement un premier et un deuxième point de pivotement (15, 16).

3. Appareil de cuisine (1) selon l'une des revendications précédentes, **caractérisé en ce que** le dispositif de commande (20) comprend des moyens destinés à la mise en contact (21) du premier et/ou du deuxième dispositif d'actionnement (11, 12).

4. Appareil de cuisine (1) selon l'une des revendications précédentes, **caractérisé en ce que** les dispositifs d'actionnement (11, 12) comprennent des moyens élastiques pour être amenés dans une position de non-actionnement.

5. Appareil de cuisine (1) selon l'une des revendications précédentes, **caractérisé en ce que** le dispositif de commande (20) est agencé sur un boîtier (40) de l'appareil de cuisine (1) entre les dispositifs d'actionnement (11, 12).

6. Appareil de cuisine (1) selon l'une des revendications précédentes, **caractérisé en ce que** le dispositif de commande (20) est agencé sur le deuxième dispositif d'actionnement (12).

7. Appareil de cuisine (1) selon l'une des revendications précédentes, **caractérisé en ce que** les dispositifs d'actionnement (11, 12) sont agencés sensiblement face à face sur l'appareil de cuisine.

8. Appareil de cuisine (1) selon l'une des revendications précédentes, **caractérisé en ce que** la zone d'actionnement (31) du premier dispositif d'actionnement (11) est adaptée pour être actionnée par un moyen d'actionnement, lequel est agencé sur un boîtier (4) de l'appareil de cuisine ou sur un accessoire de l'appareil de cuisine.

9. Appareil de cuisine (1) selon l'une des revendications précédentes, **caractérisé en ce que** la zone d'actionnement (32) du deuxième dispositif d'actionnement (12) est adaptée pour être actionnée par un moyen d'actionnement, lequel est agencé sur un accessoire de l'appareil de cuisine ou sur le boîtier (4) de l'appareil de cuisine.

10. Appareil de cuisine (1) selon l'une des revendications précédentes, **caractérisé en ce que** les dispositifs d'actionnement (11, 12) ont un point de pivotement commun, de telle sorte que les dispositifs d'actionnement (11, 12) sont agencés autour d'une zone de réception (41) d'accessoires de l'appareil de cuisine.

11. Appareil de cuisine (1) selon l'une des revendications précédentes, **caractérisé en ce que** les dispositifs d'actionnement (11, 12) sont agencés sensiblement dans le même plan.

12. Appareil de cuisine (1) selon l'une des revendications précédentes, **caractérisé en ce que** le premier dispositif d'actionnement (11) coopère avec un moyen qui est agencé sur une partie inférieure d'un accessoire de l'appareil de cuisine, de telle sorte que le premier dispositif d'actionnement peut pivoter autour du point de pivotement (15).

13. Appareil de cuisine (1) selon l'une des revendications précédentes, **caractérisé en ce que** le deuxième dispositif d'actionnement (12) coopère avec un moyen qui peut être mis à disposition par la mise en place d'un élément formant couvercle de l'accessoire de l'appareil de cuisine.

14. Appareil de cuisine (1) selon l'une des revendications précédentes, **caractérisé en ce que** l'appareil de cuisine comprend un interrupteur de sécurité qui coopère avec les premier et deuxième dispositifs de sécurité (11, 12) pour commander le fonctionnement de l'appareil de cuisine (1).
